# NEW EUROPEAN PATENT SPECIFICATION

(11) **EP 0 258 466 B2**
(45) Date of publication and mention of the opposition decision: **31.03.1993**
(45) Mention of the grant of the patent: 03.05.1989
(21) Application number: 86111758.8
(22) Date of filing: 25.08.1986
(51) Int. Cl.: C07C 29/88, C07C 31/18, C07C 41/44, C07C 67/60

(54) **Bicyclic amide acetals as moisture scavengers**
Bicyclische Amidacetale als Feuchtigkeitsauffänger
Acétals d'amides bicycliques comme capteurs d'humidité

(43) Date of publication of application: 09.03.1988
(73) Proprietor: Ashland Oil, Inc., Russell Kentucky 41169 (US)
(72) Inventor: Richards, Harvey J., Columbus Ohio 43221 (US); Goel, Anil B., Worthington Ohio 43085 (US)
(74) Representative: VOSSIUS & PARTNER

(56) References cited:
- DE-A- 3 143 251
- US-A- 4 501 679
- US-A- 4 600 796
- US-A- 4 605 746
- Synthesis, January 1971, p. 16-26

## Description

This invention relates to a method for removing trace amounts of water from mixtures of monohydroxyvinyl monomers with water by treatment of these mixtures with bicyclic amide acetals.

Bicyclic amide acetals are relatively new materials. The preparation of some of the bicyclic amide acetals is more fully disclosed in US-A4 683 077 and 4 605 746. Bicyclic amide acetals have been shown to undergo hydrolysis with excess of water to give the corresponding amide diol [Ann. Chem. 716, 135 (1968)] but no report or suggestion has been made that these materials might have unique water scavenging properties in the presence of monomers, polymers, and particularly materials which have reactive hydrogen functionality such as hydroxyl groups.

The bicyclic amide acetals which are useful in this invention include those having the Formula I 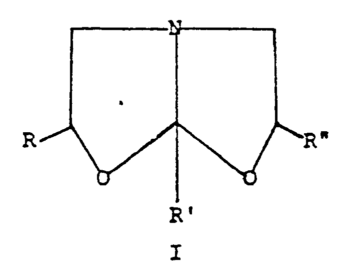 wherein R and R" independendy represent hydrogen or an alkyl group having from 1 to 18 carbon atoms, and R" also represents an alkyl ether, aryl or alkaryl ether group having from 1 to 18 carbon atoms, and R' represents an alkyl group having from 1 to 18 carbon atoms, an aryl group having from 6 to 12 carbon atoms, or an alkaryl group having from 7 to 20 carbon atoms.

Materials which can be conveniently dehydrated by bicyclic amide acetals include mono- -hydroxyvinyl monomers such as hydroxyethyl acrylate, hydroxypropyl acrylate, hydroxyethyl methacrylate, hyroxy- propyl methacrylate, and the like.

The process of this invention is carried out in the temperature range of from about room temperature up to about 200°C.

The process of this invention is further illustrated in the following representative examples.

### EXAMPLE

A sample of 101.4 g of hydroxy propyl methacrylate containing 0.446% by weight of water was treated with 3.84 g of bicyclic amide acetal of Formula I in which R' represents methyl and R and R" represent hydrogen. The mixture after standing at room temperature for 18 hours was found to contain 81 ppm of water. r.

## Claims

1. A process for removing water from mixtures of monohydroxyvinyl monomers and water comprising adding to said mixtures a bicyclic amide acetal of the formula 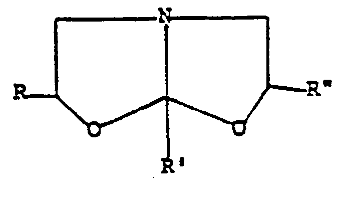 wherein R and R" independently represent hydrogen or an alkyl group having from 1 to 18 carbon atoms, and R" also represents an alkyl ether, aryl oralkaryl ether group having from 1 to 18 carbon atoms, and R' represents an alkyl group having from 1 to 18 carbon atoms, an aryl group having from 6 to 12 carbon atoms, or an alkaryl group having from 7 to 20 carbon atoms
and allowing the water to react with the bicyclic amide acetal at a temperature in the range of from about room temperature up to about 200°C.

2. The process according to claim 1 wherein the bicyclic amide acetal is one in which R and R" are hydrogen and R' is methyl.

3. The process according to claim 1 wherein the monohydroxyvinyl monomer is hydroxyethyl acrylate.

4. The process according to claim 1 wherein the monohydroxyvinyl monomer is hydroxypropyl acrylate.

5. The process according to claim 1 wherein the monohydroxyvinyl monomer is hydroxyethyl methacrylate.

6. The process according to any one of claims 1 or 2 wherein the mono-hydroxyvinyl monomer is hydroxypropyl methacrylate.

## Patentansprüche

1. Verfahren zur Entfernung von Wasser aus Gemischen von Monohydroxylvinyl-Monomeren und Wasser, umfassend die Zugabe eines bicyclischen Amidacetals der Formel 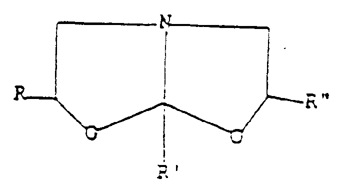 in der Rund R" unabhängig voneinander Wasserstoffatome oder einen Alkylrest mit 1 bis 18 Kohlenstoffatomen bedeuten und R" auch einen Alkyläther-, Aryl- oderAraikyiätherrest mit 1 bis 18 Kohlenstoffen bedeutet, und R' einen Alkylrest mit 1 bis 18 Kohlenstoffatomen, einen Arylrest mit 6 bis 12 Kohlenstoffatomen oder einen Alkarylrest mit 7 bis 20 Kohlenstoffatomen darstellt, zu den Gemischen
und die Reaktion des Wassers mit dem bicyclischen Amidacetal bei einer Temperatur im Bereich von etwa Raumtemperatur bis etwa 200°C.

2. Verfahren nach Anspruch 1, in dem das bicyclische Amidacetal eines ist, in dem R und R" Wasserstoffatome bedeuten und R' einen Methylrest darstellt.

3. Verfahren nach Anspruch 1, in dem das Monohydroxylvinyl-Monomere Hydroxyäthylacrylat ist.

4. Verfahren nach Anspruch 1, in dem das Monohydroxylvinyl-Monomere Hydroxypropylacrylat ist.

5. Verfahren nach Anspruch 1, in dem das Monohydroxylvinyl-Monomere Hydroxyäthylmethacrylat ist.

6. Verfahren nach einem derAnsprüche 1 oder 2, in dem das Monohydroxylvinyl-Monomere Hydroxypropylmethacrylat ist.

## Revendications

1. Procédé pour éliminer l'eau de mélanges monomères monohydroxyvinyliques et d'eau consistant à ajouterauxdits mélanges un acétal d'amide bicyclique répondant à la formule 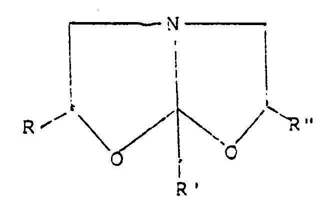 dans laquelle R et R" représentent, indépendamment, l'hydrogène ou un groupe alkyle ayant 1 à 18 atomes de carbone, R" représentant également un groupe alkyl éther, aryl ou alcaryl éther ayant 1 à 18 atomes de carbone et R' représente un groupe alkyle possédant 1 à 18 atomes de carbone, un groupe aryle possédant 6 à 12 atomes de carbone ou un groupe alcaryle avec 7 à 20 atomes de carbone, et à laisser réagir l'eau avec l'acétal d'amide bicyclique à une température se situant dans le domaine de la température ambiante environ jusqu'à environ 200°C.

2. Procédé selon la revendication 1, dans lequel l'acétal d'amide bicyclique est un acétal dans lequel R et R" sont l'hydrogène et R' est un méthyle.

3. Procédé selon la revendication 1, dans lequel le monomère monohydroxyvinylique est l'acrylate d'hydroxyéthyle.

4. Procédé selon la revendication 1, dans lequel le monomère monohydroxyvinylique est l'acrylate d'hydroxypropyle.

5. Procédé selon la revendication 1, dans lequel le monmère monohydroxyvinylique est le méthacrylate d'hydroxyéthyle.

6. Procédé selon l'une quelconque des revendications 1 ou 2, dans lequel le monomère monohydroxyvinylique est le méthacrylate d'hydroxypro- pyle.
